Europäisches Patentamt

European Patent Office

Office européen des brevets

(19)

(11) Publication number : **0 662 774 A1**

# (12) EUROPEAN PATENT APPLICATION

(21) Application number : 95100128.8

(51) Int. Cl.⁶ : **H04N 9/69**, H04N 9/30

(22) Date of filing : 05.01.95

(30) Priority : 07.01.94 US 178975

(43) Date of publication of application :
12.07.95 Bulletin 95/28

(84) Designated Contracting States :
DE FR GB IT NL

(71) Applicant : TEXAS INSTRUMENTS
INCORPORATED
13500 North Central Expressway
Dallas Texas 75265 (US)

(72) Inventor : Gove, Robert J.
1405 Scarborough Lane
Plano, TX 75075 (US)

Inventor : Heimbuch, Scott D.
7719 Scotia Drive
Dallas, TX 75248 (US)
Inventor : Markandey, Vishal (nmi)
5630 Loring Drive
Apt. No. 157
Dallas, TX 75209 (US)
Inventor : Marshall, Stephen W.
1408 North Cheyenne Drive
Richardson, TX 75080 (US)
Inventor : Doherty, Donald B.
3908 West Runge Court
Irving, Texas 75038 (US)

(74) Representative : Schwepfinger, Karl-Heinz,
Dipl.-Ing.
Prinz & Partner,
Manzingerweg 7
D-81241 München (DE)

(54) Linearization for video display system with spatial light modulator.

(57) A processing system for a digital display system that receives a gamma-corrected, component, video signal for display on a spatial light modulator. The video input is digitized and the digitized data is converted to RGB colorspace, prior to being linearized by a de-gamma process that removes all or part of the gamma-correction. Additional processing, such as line generation, may be performed before or after colorspace conversion and linearization. Various techniques can be implemented for reducing the quantization effects of digital linearization.

FIG. 4

EP 0 662 774 A1

## TECHNICAL FIELD OF THE INVENTION

This invention relates to video display systems, and more particularly to linearizing a gamma-corrected video signal in a video display system having a spatial light modulator.

## BACKGROUND OF THE INVENTION

Video display systems based on spatial light modulators (SLMs) are increasingly being used as an alternative to display systems using cathode ray tubes (CRTs). SLM systems provide high resolution displays without the bulk and power consumption of a CRT system.

Digital micromirror devices (DMDs) are a type of SLM, and may be used for either direct view or projection display applications. A DMD has an array of micro-mechanical mirror elements, each individually addressable by an electronic data signal. Depending on the state of its addressing signal, each mirror element tilts so that it either does or does not reflect light to the image plane. Other SLMs operate on similar principles, with pixel elements that emit or reflect light simultaneously with other pixel elements, such that a complete image frame is generated by addressing pixel elements rather than by scanning a screen. Another example of an SLM is a liquid crystal display (LCD) having individually driven pixel elements.

For processing data in an SLM-based system, as is the case with other digital image processing systems, the processor operates on pixel data. Interlaced data is arranged pixel-by-pixel, row-by-row, and field-by-field.

Scan conversion techniques may be used to generate frames of display data from fields. Non-interlaced data is already arranged into display frames. Processing tasks such as colorspace conversion and scaling, as well as scan conversion, are performed on the pixel data.

Most of today's source signals, analog and digital, are pre-compensated with a transfer function, a gamma function, which compensates for non-linearities of CRT displays. However, an SLM has a linear response. Therefore, because of the different characteristics of an SLM, the video signal, or its sampled data, must be undergo some sort of "de-gamma" process to remove the effects of the gamma correction, in order for optimum image quality to be obtained.

## SUMMARY OF THE INVENTION

One aspect of the invention is a processing system for a display system that receives a gamma-corrected, component, video input signal for display on a spatial light modulator. An analog to digital converter converts the input signal to component pixel data. A colorspace conversion processor converts the component pixel data to RGB (red, green, blue) data. A de-gamma processor removes all or part of the gamma-correction of the RGB pixel data. A display memory receives processed pixel data and formats it into bit-planes for display by the spatial light modulator.

A technical advantage of the invention is that linearization (de-gamma) after digitization and colorspace conversion to RGB data provides color rendition accuracy. The order of the linearization process, and other pixel processing tasks such as line generation, can be rearranged to meet cost and performance goals of a particular digital display system. Various techniques can be used to overcome problems associated with quantizing the data.

## BRIEF DESCRIPTION OF THE DRAWINGS

Figures 1 and 2 are block diagrams of color display systems having processing systems that apply a de-gamma function in accordance with the invention.

Figure 3 illustrates how a video signal is linearized by applying a function that is the inverse of the gamma-correction function.

Figure 4 illustrates one embodiment of the processing system of Figures 1 and 2.

Figure 5 illustrates a second embodiment of the processing system of Figures 1 and 2.

Figure 6 illustrates a third embodiment of the processing system of Figures 1 and 2.

Figures 7 - 10 illustrate one embodiment of a display memory.

Figure 11 illustrates a portion of the linearizing (de-gamma) function of Figure 3, and further illustrates how at low intensities, quantization results in "repeated codes".

Figures 12 and 13 illustrate a de-gamma preprocessor for reducing quantization error.

## DETAILED DESCRIPTION OF THE INVENTION

A comprehensive description of a DMD-based digital display system is set out in U.S. Patent No. 5,079,544, entitled "Standard Independent Digitized Video System", and in U.S. Patent Serial No.08/147,249 (Atty Dkt No. TI-17855), entitled "Digital Television System", and in U.S. Patent Serial No. 08/146,385 (Atty Dkt No. TI-17671), entitled "DMD Display System", each assigned to Texas Instruments Incorporated, and each incorporated by reference herein.

U.S. Patent Serial No. 07/678,761, entitled "DMD Architecture and Timing for Use in a Pulse-Width Modulated Display System" (Atty Dkt No. TI-15721), describes a method a formatting video data for use with a DMD-based display system and a method of modulating bit-planes of data to provide varying pixel brightness. The general use of a DMD-based display system with a color wheel to provide sequential color images is described in U.S. Patent Serial No. 07/809,816 (Atty Dkt No. TI-16573), entitled "White Light Enhanced Color Field Sequential Projection". These patent applications are assigned to Texas Instruments Incorporated, and are incorporated herein by reference.

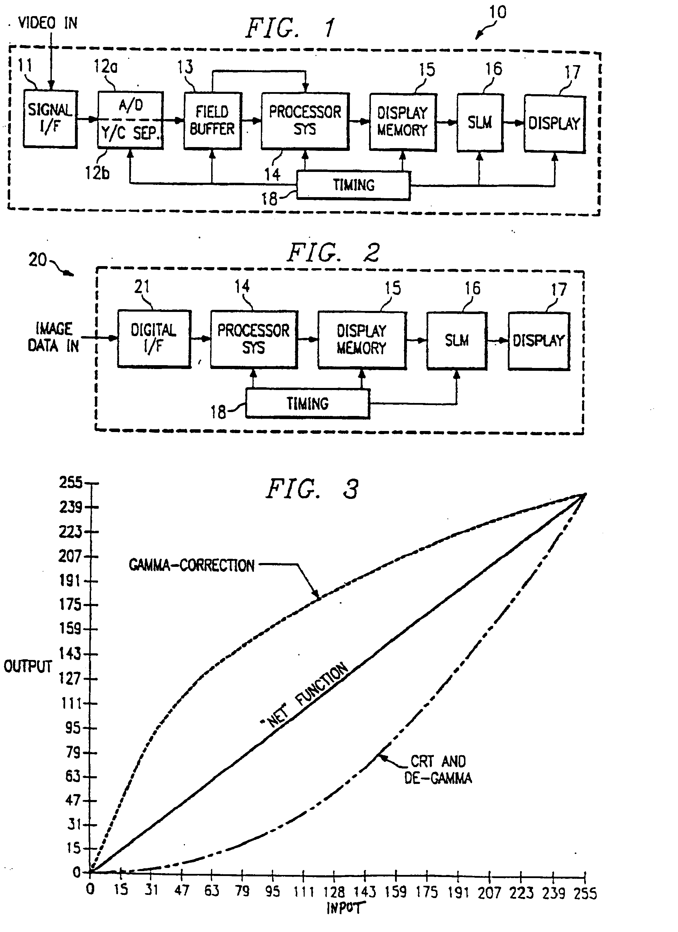

Figure 1 is a block diagram of an SLM-based display system 10, which receives an analog video signal, such as a broadcast television signal. For purposes of this description, an input signal that has been "gamma-corrected" is assumed. Display system 10 could be any type of equipment for receiving an analog composite video signal and displaying images represented by the signal. Figure 2 is a block diagram of a similar system 20, in which the input signal already represents digital data. In both Figures 1 and 2, only those components significant to main-screen pixel data processing are shown. Other components, such as might be used for processing synchronization and audio signals or secondary screen features, such as closed captioning, are not shown.

A display frame having 640 pixels per row, 480 rows per frame, and 24 bits per pixel, sampled from an NTSC signal, is assumed. This is after a line generation process is performed by processing system 14, to convert interlaced fields having 240 odd-rows or 240 even-rows of data into display frames having 480 rows. There are 8 bits of data per pixel of each of three colors. It is also assumed that the input signal is a "component" signal, having a luminance component and a color difference component, or some signal other than an RGB signal.

As an overview of the operation of display system 10, signal interface unit 11 receives an analog video signal and separates video, synchronization, and audio signals. It delivers the video signal to A/D converter 12a and Y/C separator 12b, which convert the data into pixel-data samples and which separate the luminance ("y") data from the chrominance ("C") data, respectively. In Figure 1, the signal is converted to digital data before Y/C separation, but in other embodiments, Y/C separation could be performed before A/D conversion, using analog filters.

A field buffer 13 is interposed between Y/C separator 12b and processor 14. This field buffer 13 is useful for field spreading. Because the SLM-based system 10 does not require vertical blanking time, the extra time between fields may be used to increase the time available for processing data and for loading data to SLM 16. Field buffer 13 may have other functions related to line generation, color wheel synchronization, and scaling.

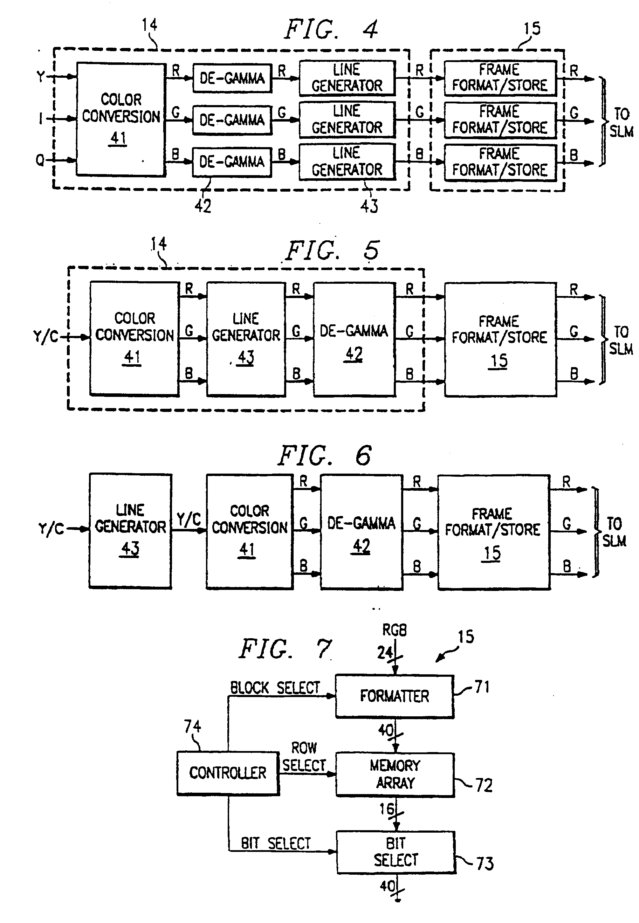

Processor system 14 prepares the data for display, by performing various pixel data processing tasks. Processor system 14 includes a processing memory for storing pixel data during processing. As explained below in connection with Figures 4 - 6, the tasks performed by processor system 14 include colorspace conversion, linearization, and line generation.

Display memory 15 receives processed pixel data from processor system 14. As explained below in connection with Figures 7 - 10, display memory 15 formats the data, on input or on output, into "bit-plane" format, and delivers the bit-planes to memory cells of SLM 16. The bit-plane format permits each pixel element of SLM 16 to be turned on or off in response to the value of each bit of data. In a typical display system 10, display memory 15 is a "double buffer" memory, which means that it has a capacity for at least two display frames. The buffer for one display frame can be read out to SLM 16 while the buffer another display frame is being written. The two buffers are controlled in a "ping-pong" manner so that data is continuously available to SLM 16.

SLM 16 may be any type of SLM. Although this description is in terms of a DMD-type of SLM 16, other types of SLMs could be substituted into display system 10 and used for the invention described herein. For example, SLM 16 could be an LCD-type SLM having addressable pixel elements. Details of a suitable SLM 16 are set out in U.S. Patent No. 4,956,619, entitled "Spatial Light Modulator", which is assigned to Texas Instruments Incorporated, and incorporated by reference herein.

Display unit 17 has optical components for receiving the image from SLM 16 and for illuminating an image plane such as a display screen. For color displays, the bit-planes for each color could be sequenced and synchronized to a color wheel that is part of display unit 17. Or, the data for different colors could be concurrently displayed on three SLMS and combined by display unit 17. Master timing unit 18 provides various system control functions.

Gamma Correction and De-gamma Linearization

Figure 3 illustrates the gamma-correction function applied to a transmitted video signal, such as the NTSC signal. Figure 3 also illustrates a linearizing function that is the inverse of the gamma-correction function, and the resulting net linear function that is obtained by applying the linearizing function to the gamma-corrected function.

In Figure 3, for purposes of example, the linearizing function results in a net function that is linear. However, in a more general sense, the linearizing function is linearizing in the sense that it tends to make the data more linear by removing all or part of the gamma-correction function. The linearization function might also "over compensate" for the gamma-correction so that the net function is positive. It should be understood that the term "linearizing" is used herein in this general sense, rather than to mean a function that results in an exactly linear resultant.

The term "de-gamma" is used herein synonymously with linearization, to mean removal of all or part of the gamma correction, as well as to achieve overcompensation.

In Figure 3, each function is illustrated in terms of input versus output values of intensity. The intensity values are within a range of 0 - 255, as may be represented by an 8-bit digital value.

More specifically, at transmission, NTSC standards call for a "gamma-corrected red, green, and blue voltages suitable for a color picture tube....". The gamma-corrected function has an exponential characteristic of the form:

$$y = k' x^{1/\gamma},$$

where $\gamma$ is an expected gamma factor applied by a color picture tube. A typical value of gamma is 2.2.

The linearization function, also referred to herein as the "de-gamma" function has an exponential characteristic of the form:

$$y = k x^{\gamma}.$$

The constants, k' and k, are normalizing factors so that $y = x = 0$ and $y = x = 255$ at the minimum and maximum intensity values. As explained below, the value of gamma for the de-gamma function is not necessarily the same as the value of gamma used for the gamma correction function.

Pixel Processing

Figures 4 - 6 illustrate various embodiments of processor system 14. In each embodiment, processor system 14 performs at least two pixel processing functions: colorspace conversion and linearization (de-gamma). Line generation is also performed if the input data signal has fewer lines per field than the desired number of lines per display frame. As stated above, display memory 15 formats the display-ready data into bit-planes and stores the bit-planes for delivery to SLM 16.

In Figure 4, the processing for each color is shown as a separate data path. It should be understood that in Figures 5 and 6, although separate data paths are not explicitly shown, the pixel data for each color also follows its own data path. The data for each color is delivered to the SLM 16 in synchronization with a color wheel (for a one-SLM color system) or to its corresponding SLM 16 (for a three-SLM color system).

A common feature of the embodiments of Figures 4 - 6 is that linearization is performed on digital data. Also, linearization is performed after colorspace conversion to RGB data. The performance of linearization on RGB data is due to the recognition that linearization prior to colorspace conversion results in color rendition errors.

In each of the embodiments of Figures 4 - 6, the processing tasks could be performed by a functionally distinct processing component: a colorspace converter 41, a linearizer 42, and a line generator 43. However, these processing components could all be implemented with a single instruction-based processor. The instructions for each tasks could be stored in a program memory.

For example, the processing components 41 - 43 could be implemented with a device known as a "scanline video processor" (SVP), manufactured by Texas Instruments Incorporated, which is especially suited to processing a row of data. A description of an SLM-based display system that uses SVP processors is set out in U.S. Patent Serial No.08/147,249 (Atty Dkt No. TI-17855), incorporated by reference above. In this case, the implementation is referred to herein as a "software". implementation.

Alternatively, the processing components 41 - 43 could be implemented as a logic circuit configured to operate on input data to achieve desired output data. An example of such an implementation is with programmable gate arrays, or with fully custom logic circuits. In these cases, the implementation of the processing components is referred to herein as a "hardware" implementation. It should also be understood that in any given implementation, some of the tasks may be performed as with a combination of software and hardware implementations .

Figure 4 illustrates one embodiment of processing system 14, in which colorspace conversion is followed by linearization, and then line generation Each of these "processing" components is shown as a functional block, and each is referred to herein as a "processor". The term "processor" is used in a general sense to include any device or circuit, software or hardware, that operates on the data in accordance with the algorithms described below.

Colorspace converter 41 converts the pixel data to RGB colorspace. For example, an NTSC input signal has a Y component and two C components, I and Q. Pixel data representing these three components are converted into R, G, and B signals. Colorspace converter 41 typically uses standard matrix multiplication to convert from one colorspace to another. For example, pixel data from an NTSC signal may be converted to RGB colorspace by Performing the following operations:

$$\begin{bmatrix} R \\ G \\ B \end{bmatrix} = \begin{bmatrix} 1.0 & 0.96 & 0.62 \\ 1.0 & -0.28 & 0.65 \\ 1.0 & -1.10 & 1.70 \end{bmatrix} \begin{bmatrix} Y \\ I \\ Q \end{bmatrix}$$

Other conversions use different matrix values. Various colorspace conversion techniques for different input signals are described in U.S. Patent Serial N0.08/147,249 (Atty Dkt No. TI-17855), incorporated by reference above.

Linearizer 42 removes all or part of the "gamma-correction', which was introduced into the input video signal prior to transmission. As stated above in connection with Figure 3, a typical de-gamma function performed by linearizer 42 is;

$$y = k x^\gamma.$$

The gamma value used for de-gamma is not necessarily the same as the gamma value used at transmission. In fact, experimentation has indicated that viewer perception is enhanced if the de-gamma operation overcompensates the gamma-correction, thereby resulting in a net positive curve.

Linearizer 42 may be implemented as a look-up table. The input values 0 - 255 are addresses to the look-up table, which provides output values from 0 - 255. The look-up table may be implemented by known means, such as with a random access memory (RAM) or read-only memory (ROM). Each gamma-corrected pixel value is thereby mapped to a de-gamma value that removes (or overcompensates) the effect of the gamma correction.

Linearizer 42 may also be implemented with a processor, such as the SVP processor. A technique known as piecewise approximation divides the gamma curve into segments, and each segment is associated with a segment function of the form:

$$y = mx + b.$$

Any desired number of segments and associated segment functions can be used. The processor performs a real-time calculation for each input value, with different ranges of input values being used in their corresponding segment functions. The de-gamma process can be easily varied by changing the values of m and b for each segment function.

Line generator 43 uses field data to generate display frames. For example, in an interlaced NTSC signal, where alternating fields have 240 odd rows or 240 even rows, line generator 43 generates an additional 240 rows per frame, so that each display frame has 480 rows. This type of line generation is commonly referred to as "proscan" conversion. However, it should be understood that line generator 43 could be used to process any type of data, interlaced or non-interlaced, so that the display frames have additional lines of data.

Line generator 43 may be implemented as a processor that is programmed to execute various algorithms. Three examples of line generation algorithms are line averaging, line doubling, and motion adaptive. Line averaging and line doubling involve creating new rows of data from data of a current field. For line averaging, line generator 43 calculates a value for each pixel i, based on values from pixels above and below it on adjacent rows of the current field. For line doubling, line generator 43 uses a value for each pixel i that is the same as that of the pixel immediately above or below it. The use of data from the current field to create extra lines tends to avoid artifacts when the image is moving. However, motion adaptive techniques optimize the generation of new rows of data by determining when adjacent fields are of a moving image. If the image is not moving, various interpolation methods may be used to calculate pixel data from neighboring pixels of adjacent fields. These line generation algorithms are further described in U.S. Patent Serial No. 08/147,249 (Atty Dkt No. TI-17855), incorporated by reference above. A pixel processor having special "feature analyzer" circuitry, which optimizes a number of line generator algorithms, is described in U.S. Patent Serial No. 08/183,534 (Atty Dkt No. TI-17866), entitled "Frame Pixel Data Generation" assigned to Texas Instruments Incorporated, and incorporated by reference herein.

Alternatively, line generator 43 could be a set of three first-in-first-out (FIFO) memory devices, one for each color. These FIFO's implement a "double-sample" line generation technique. For every row of incoming data, twice as many samples as pixels per row are obtained by A/D converter 12a. These pixel data samples follow the data path indicated in Figure 4, and when they reach the FTFO's of line generator 43, every other sample is used for a first row and the remaining samples are used for the next row. This method is especially useful for SLMs 16 having staggered pixel layouts.

Pixel data that is fully processed is formatted into bit-planes by display memory 15. As stated above, in the example of this description, each display frame has 640 x 480 samples of pixel data, and each sample has 24 bits. The formatting creates 24 bit-planes per frame, each bit-plane comprised of one bit of the same weight from each sample. Thus, each display frame has 24 bit-planes of 640 x 480 bits each. Further details of the formatting process are described below in connection with Figures 7 - 10.

Figure 5 is an alternative embodiment of processing system 14. In this embodiment, the same functions are performed as in the embodiment of Figure 4. However, linearizer 42 operates on data that has been processed by both colorspace converter 41 and line generator 43.

Figure 6 is a third alternative embodiment of processor system 14. In this embodiment, the same functions are performed as in the embodiments of Figures 5 and 6. As in Figure 5, prior to linearization, the pixel data has been converted to RGB and extra lines have been generated. However, in Figure 6, the order of line generation and colorspace conversion is switched.

The alternative embodiments of Figures 4 - 6 represent optimizations of several factors significant to an image display system. A first factor is that of image quality. Cost should be minimized, with reduction of memory requirements being a significant cost consideration. Finally, processing speed should be maximized.

As stated above, in all embodiments, picture quality is aided by performing linearization on RGB data. The embodiments of Figures 4 and 5, in which both line generation and linearization are performed on RGB data, further aids picture quality. However, these embodiments require sufficient memory to store the RGB data for line generation processing. In contrast, the embodiment of Figure 6, in which line generation occurs before RGB conversion, reduces cost. More specifically, in the embodiment of Figure 6, line generation is performed on the Y component of the pixel data so that less memory is required. Also, because less processing is required, processing speed is maximized. A final consideration is that the embodiment of Figure 4 permits a wider variety of line generation methods to be implemented, including hardware implementations that exploit the addressing features of SLMs.

Formatting

Figure 7 illustrates one example of a display memory 15 that implements the formatting and display frame storage function. Display memory 15 is comprised essentially of a formatter 71, a memory array 72, a bit selector 73, and a controller 74.

Figure 7 assumes a non-partitioned memory, where memory 15 stores data for all rows. In a partitioned memory, memory 15 might store data for only the top or bottom half of SLM 16, and a second memory 15 would store data for the other half. The principles of the invention would be the same for a partitioned memory, except that each partition would operate in parallel.

Incoming pixel data is written to memory 15 sample-by-sample, row-by-row, frame-by-frame. Thus, the incoming data samples are 24 bits wide, 8 bits for each color. Formatter 71 re-arranges this data into bit-level data.

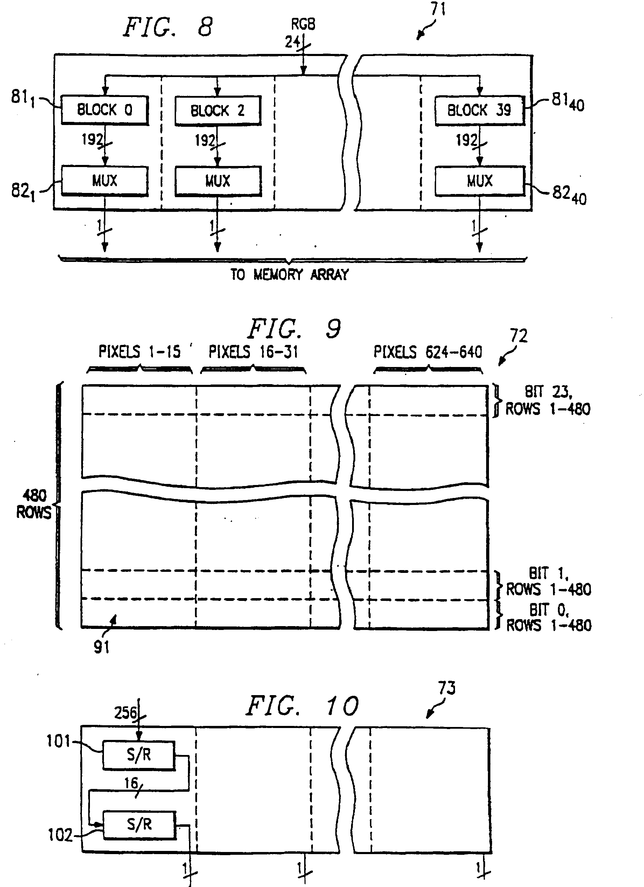

Figure 8 illustrates one embodiment of formatter 71. Each row of data (640 pixel samples) is divided into 40 blocks of 16 samples each (40 x 16 = 640) Each of the 40 blocks has a block register 81. Each block register 81 receives one block of data. Because each sample is 24 bits, the capacity of each block register 81 is 384 bits (24 x 16 = 384). After the first block register 81 has been filled with data for the first sixteen samples, controller 74 addresses the next block register 81, which stores the data for the next sixteen samples. This process continues until each block register 81 has been filled with data for 16 samples, and hence the 40 block registers 81 store the data for one row.

A multiplexer 82 associated with each block register 81 receives the data from that block register 81. Each multiplexer 82 outputs its data, one bit at a time, to memory array 72.

As illustrated in Figure 9, memory array 72 has 40 columns, one column for each block register 81 of formatter 71. Each column stores data for 16 pixels of 480 rows. Each column is further divided into bit-plane areas 91, for storing bit-levels of the 16 pixels and 480 rows of that column. Thus, each column has 24 bit-plane areas 91, one for each bit-level. Each area 91 stores 7680 bits (1 bit per pixel x 16 pixels x 480 rows = 7680 bits). Across the 40 columns of array 72, the 24 bit-planes that comprise one display frame are stored.

Referring again to Figure 7, the data moves from array 72 into bit selector 73. As compared to the data into formatter 71, the data into bit selector 73 arrives in bit-level order.

Figure 10 illustrates bit selector 73 in further detail. Bit selector 73 has 40 columns, one associated with each column of array 72. Each column has a first shift register 101, which receives 256 bits of data (1 bit x 16 pixels x 16 rows = 256 bits) from a bit-plane area 81 of array 72. These 256 bits are of the same bit level but from different rows, such that across the 40 columns of bit selector 73, the shift registers 101 store one level of bit-plane data for 16 rows. A second shift register 102 in each column selects every 16th bit so that the data delivered to SLM 16 is in bit-planes, row-by-row. Each of the 40 columns delivers 1 bit at a time to SLM 16.

Referring again to Figure 7, controller 74 provides block addresses, row addresses, and bit-plane addresses for formatter 71, array 72, and bit selector 73, respectively. These addresses may be generated internally with counters, or provided externally by processor 14 or by timing unit 18. Another function of controller 74 is to resolve conflicts if access to the same data for reading and writing is attempted. This may be accomplished with techniques known in the art of memory management, especially for the case of dual ported memories.

The display memory 15 described in connection with Figures 7 - 10 is only one example of a display memory 15 for formatting and storing display frames. Further details are set out in U.S. Patent Serial No. 755,981, entitled "Data Formatter with Orthogonal Input/Output and Spatial Reordering", assigned to Texas Instruments Incorporated, and incorporated by reference herein. Other types of display memories 15 may use other means for formatting the data into bit-planes U.S. Patent Serial No. 08/160,344 (Atty Dkt No. TI-17404), entitled "Digital Memory for Display System Using Spatial Light Modulator, assigned to Texas Instruments Incorporated, and incorporated by reference herein, describes a display memory 15 that stores data in pixel format and has a means for formatting the data into bit-planes on output.

Quantization Error Reduction

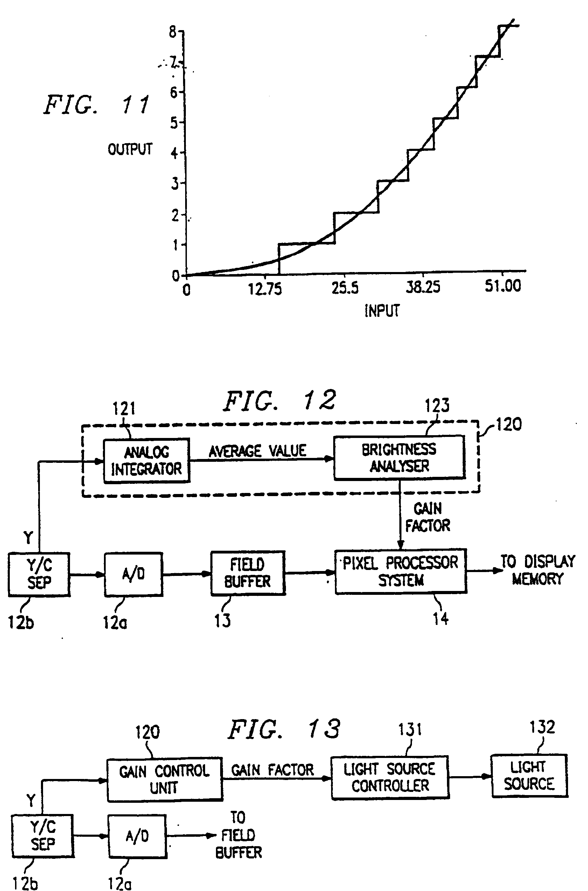

Figure 11 illustrates a portion of the linearizing (de-gamma) function and the effect of quantization when the function is applied to the digital RGB data in accordance with the invention. As stated above in connection with Figure 3, the linearizing function is applied to the data to remove the effects of the gamma-correction function applied at transmission. It should be understood that the linearizing curve of Figure 11 is a representation for illustrative purposes as are the values given in the following transformation examples. True de-gamma values may be obtained in accordance with the calculations discussed above.

For 8-bit data, the range of values represents 256 levels of light intensity. At low intensities, the transformation results in "repeated" values. About 20% of the input range of values (approximately 0 - 50) map to only about 8 output values. Each increment of the output values represents a large increase in brightness of the input values. Although not illustrated, a high intensities, the transformation results in "missing" values. Only a very small increase in brightness of the input values results in an increment in the output value.

Experimentation has indicated that at low intensities, quantization results in perceivable effects.

To reduce these effects, various intensity control techniques may be implemented.

Figure 12 illustrates an analog method for reducing the effects of digital de-gamma. A de-gamma preprocessor 120 provides a gain factor to be applied to all pixel values of a frame of pixel data whose average intensity does not exceed a certain threshold. More specifically, de-gamma preprocessor 120 has an analog integrator 121 that receives the analog Y component of the input signal.

Integrator 121 has a capacitor whose time constant is set at the frame rate. The output of integrator 121 is a signal that represents the average intensity value of all pixels within a given frame. A brightness analyzer 123 receives this signal and compares it to a predetermined brightness threshold. If the average intensity value is less than the threshold, brightness analyzer 123 provides a non-unity gain factor to be applied to the luminance values of each pixel of that frame. For example, the brightness threshold might be set at an average intensity of 8. For a frame having an average intensity of 0, each pixel might be adjusted higher by a gain factor of 1.10.

For a frame having an average intensity just at the threshold (8), each pixel might be adjusted by a lesser gain factor, for example 1.01. The gain factor is unity for frames having an average intensity above 8. The result is to keep the pixel data of "dim" frames near the center of the intensity scale, where the gamma function is more linear. A similar technique could be used at the bright end of the intensity range. After the luminance pixel data is adjusted by the gain factor, pixel processing continues as described above in connection with Figures 4 - 6.

Alternatively, the gain factor could be determined digitally. In this case, processing system 14 would include a de-gamma preprocessor that computes an average pixel value for the luminance data values of each frame.

If the average value does not exceed a predetermined brightness threshold, a non-unity gain factor is determined, in a manner similar to that discussed above in connection with Figure 12. The gain factor is used to adjust the luminance values of all pixels in the dim frames.

Figure 13 illustrates another method for reducing the quantization effects of digital de-gamma. Again, gain control unit 120 provides a gain value, but the gain value is delivered to the light source that illuminates the SLM 16. For "dim" frames, a light source controller 131 adjusts the intensity of the light source 132, in accordance with the gain value. The result is to keep the displayed image near the center of the intensity scale.

Another technique for reducing quantization errors is to digitize the data at a greater resolution than the output of linearizer 32. For example, referring to Figure 1, A/D converter 12a could sample the data such that each pixel is represented by a 10-bit value. Then, referring to Figures 3 and 11, the input range would be 0 - 1023. The output range would be 0 - 255 for an 8-bit output value. In this case, as compared to Figure 3, each increment of an output value would be more accurately represented by the smaller increment of input values. Increasing the output range of the look-up table to a 10-bit value (0-1023) would reduce the percentage change between intensity levels by a factor of 4 thus minimizing the perceived contouring effects at low intensities.

Other Embodiments

Although the invention has been described with reference to specific embodiments, this description is not meant to be construed in a limiting sense. Various modifications of the disclosed embodiments, as well as alternative embodiments, will be apparent to persdns skilled in the art. It is, therefore, contemplated that the appended claims will cover all modifications that fall within the true scope of the invention.

Claims

1.  A processing system for a digital display system that receives a gamma-corrected, color component, video input signal for display on a spatial light modulator, comprising:

    an analog to digital converter for converting said input signal to component pixel data;

    a colorspace conversion processor for converting said component pixel data to RGB (red, green, blue) data;

a de-gamma processor for removing all or part of the gamma-correction of said pixel data; and

a display memory for receiving processed pixel data and for formatting said pixel data into bit-planes for display by said spatial light modulator.

2. The processing system of Claim 1, further comprising a line generator for receiving said pixel data from said de-gamma processor and for generating additional lines of pixel data.

3. The processing system of Claim 1 or Claim 2, further comprising a line generator for receiving said pixel data from said analog to digital converter and for generating additional lines of pixel data.

4. The processing system of any of Claims 1 to 3, wherein said colorspace conversion processor is a memory that stores a look-up table.

5. The processing system of any of Claims 1 to 3, wherein said de-gamma processor is a memory that stores a look-up table.

6. The processing system of any of Claims 1 to 3, wherein said de-gamma processor is a processor that performs a piecewise linearization process.

7. The processing system of any preceding Claim, further comprising a de-gamma preprocessor for determining the average brightness of a frame of pixel data and for providing a gain factor for adjusting the intensity of pixels of frames having a low average brightness value.

8. A method of processing component pixel data sampled from an input signal, to which a gamma correction function has been applied, for delivery to a spatial light modulator, comprising the steps of:

converting said component pixel data to RGB (red, green, blue) pixel data;

linearizing said RGB data by applying a de-gamma function to said RGB pixel data that removes at least part of the effects of said gamma correction function, thereby obtaining linearized pixel data; and

formatting said linearized pixel data into bit-planes for delivery to said SLM.

9. The method of Claim 8, further comprising the step of generating additional lines of pixel data prior to said converting step.

10. The method of Claim 8, further comprising the step of generating additional lines of RGB pixel data prior to said linearizing step.

11. The method of Claim 8, further comprising the step of generating additional lines of linearized pixel data after said linearizing step.

12. The method of any of Claims 8 to 11, wherein said linearizing step is performed by using pixel intensity values as input to a look-up table that provides output pixel intensity values.

13. The method of any of Claims 8 to 12, wherein said linearizing steps is performed with a processor executing stored instructions.

14. The method of any of Claims 8 to 13, wherein said formatting step is performed with input circuitry of a display memory.

15. The method of Claims 8 to 14, further comprising the step of providing a gain factor for adjusting the intensity levels of said pixel data so that the effects of quantization errors are minimized.

16. The method of Claims 8 to 15, wherein said linearizing step is accomplished by receiving RGB pixel data with higher resolution than the linearized pixel data.

17. A display system that receives a gamma-corrected, color component, video input signal for display on a spatial light modulator, comprising:

an analog to digital converter for converting said input signal to component pixel data;

a colorspace conversion processor for converting said component pixel data to RGB (red, green, blue) data;

a de-gamma processor for removing all or part of the gamma-correction of said pixel data;

a display memory for receiving processed pixel data and for formatting said pixel data into bit-planes of data; and

a spatial light modulator for receiving said bit-planes of data and for providing an image corresponding to said bit-planes of data.

18. The display system of Claim 17, further comprising a line generator for receiving said pixel data from said analog to digital converter and for generating additional lines of pixel data.

19. The display system of Claim 17, wherein said de-gamma processor is a memory that stores a look-up table.

20. The display system of any of Claims 17 to 19, wherein said de-gamma processor is a processor that performs a piecewise linearization process.

FIG. 1

FIG. 2

FIG. 3

*FIG. 4*

Y → | COLOR CONVERSION 41 | →R→ | DE-GAMMA | →R→ | LINE GENERATOR | →R→ | FRAME FORMAT/STORE | →R→
I → | | →G→ | DE-GAMMA | →G→ | LINE GENERATOR | →G→ | FRAME FORMAT/STORE | →G→ | TO SLM
Q → | | →B→ | DE-GAMMA | →B→ | LINE GENERATOR | →B→ | FRAME FORMAT/STORE | →B→

14 — 42 — 43 — 15

*FIG. 5*

Y/C → | COLOR CONVERSION 41 | →R→ | LINE GENERATOR 43 | →R→ | DE-GAMMA 42 | →R→ | FRAME FORMAT/STORE 15 | →R→
| | →G→ | | →G→ | | →G→ | | →G→ | TO SLM
| | →B→ | | →B→ | | →B→ | | →B→

14

*FIG. 6*

Y/C → | LINE GENERATOR 43 | →Y/C→ | COLOR CONVERSION 41 | →R→ | DE-GAMMA 42 | →R→ | FRAME FORMAT/STORE 15 | →R→
| | | | →G→ | | →G→ | | →G→ | TO SLM
| | | | →B→ | | →B→ | | →B→

*FIG. 7*

RGB 24 — 15

BLOCK SELECT → | FORMATTER | ~71

CONTROLLER 74 — ROW SELECT → | MEMORY ARRAY | ~72

BIT SELECT → | BIT SELECT | ~73

40

## FIG. 8

RGB
24

71

$81_1$ — BLOCK 0    BLOCK 2    BLOCK 39 — $81_{40}$

192    192    192

$82_1$ — MUX    MUX    MUX — $82_{40}$

1    1    1

TO MEMORY ARRAY

## FIG. 9

72

PIXELS 1-15    PIXELS 16-31    PIXELS 624-640

BIT 23, ROWS 1-480

480 ROWS

BIT 1, ROWS 1-480

BIT 0, ROWS 1-480

91

## FIG. 10

73

256

101 — S/R

16

102 — S/R

1    1    1

FIG. 11

FIG. 12

FIG. 13

European Patent
Office

**EUROPEAN SEARCH REPORT**

Application Number

EP 95 10 0128

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO-A-92 09064 (RANK BRIMAR LTD) | 1,5,8, 12, 14-17,19 | H04N9/69 H04N9/30 |
| Y | * abstract; figure 4 * <br> * page 8, line 31 - page 9, line 15 * | 2,3,9-11 | |
| Y | PATENT ABSTRACTS OF JAPAN <br> vol. 18, no. 110 (P-1698) 22 February 1994 <br> & JP-A-05 303 362 (SHARP CORP) 16 November 1993 <br> * abstract * | 2,3,9-11 | |
| X | EP-A-0 545 412 (TEXAS INSTRUMENTS INCORPORATED) <br><br> * page 3, line 6 - line 41 * | 1,5,8, 12,14, 17,19,20 | |
| A | EP-A-0 507 270 (TEXAS INSTRUMENTS INCORPORATED) <br> * abstract; claim 1 * | 1,8,17 | |
| A | PATENT ABSTRACTS OF JAPAN <br> vol. 15, no. 140 (P-1188) 9 April 1991 <br> & JP-A-03 018 823 (MATSUSHITA) <br> * abstract * | 1,8,17 | **TECHNICAL FIELDS SEARCHED** (Int.Cl.6) <br><br> H04N |
| A,D | EP-A-0 391 529 (TEXAS INSTRUMENTS INCORPORATED) <br> * abstract * | 1,8,17 | |

The present search report has been drawn up for all claims

| Place of search | Date of completion of the search | Examiner |
|---|---|---|
| THE HAGUE | 23 February 1995 | Pigniez, T |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................

& : member of the same patent family, corresponding
document

EPO FORM 1503 03.82 (P04C01)